# EUROPEAN PATENT APPLICATION

(11) **EP 3 543 180 A1**
(43) Date of publication of application: **25.09.2019**
(21) Application number: 18382789.8
(22) Date of filing: 06.11.2018
(51) Int. Cl.: B65G 33/02, B65G 33/26, B65G 47/28

(54) **HANGER SPACING SYSTEM**

(30) Priority: 07.11.2017 ES 201731301
(71) Applicant: Tecnimusa S.L., 30320 Fuente Alamo (ES)
(72) Inventor: GARCIA LEGAZ, JUAN, 30320 FUENTE ALAMO (ES)
(74) Representative: Díaz Pacheco, Maria Desamparados

(57) **Abstract**

Hanger spacing system with overhead conveyor means for garments hanging on hangers, and comprising at least one screw aligned with the overhead conveyor means, wherein the screw comprises: a first region (1) in a single channel; a second region (2) identical to the first region (1); and a third region (3), having the same diameter as the first region (1) and the second region (1), with a larger pitch than the other two regions and in a single channel, with its length furthermore being greater than half the length of the first and second regions (1, 2); and wherein the first to third regions (1 to 3) comprise a plurality of boreholes (6, 7, 8, 9) each arranged at 90° in a single line; wherein one borehole located in the track of the screw (6) houses a bolt, whereas the remaining holes (7, 8, 9) comprise outwardly projecting sharp elements.

## Description

As expressed in the title of the present specification, the object of the present invention is a spacer for garments hung by means of hangers in an automatic overhead conveyor. The object of the present invention is to therefore provide a system which allows, by spacing the hangers, counting, storing, and/or preparing the garments of the automatic overhead conveyor.

### STATE OF THE ART

In large systems for the preparation and sorting of hanging garments, for the preparation of orders in blocks or individually, there must always be someone on hand to confirm that the order consisting of the requested units is being performed by means of a manual count.

There are known in the state of the art several types of garment sorting systems: silo storage; garment-type sorters; the preparation of trolleys for shops from logistic centers; the individual preparation for shops from logistics centers; the individual preparation in shops with automated storage; and returned garment block spacing.

One of the biggest problems as regards spacing and/or sorting garments hanging on hangers is the hanger order and spacing. When are the hangers are ordered, there should be no issue when the hangers are in the standby position and when they are prepared with garments. However, this only occurs when the hangers are hung by an a operator who leaves the garments spaced in a specific manner, or else the garments are thick, such that a moderate distance is automatically generated to enable perfectly handling same.

Nevertheless, when the garments are driven along the automatic overhead conveyors which usually exist in warehouses, there is a high risk of failures in the execution thereof. After several up or down ramps, long hanger paths, and the difference in the thicknesses of the garments, which push said garments closer together and even into one another, jams and problems with the spacing and sorting of garments hanging on hangers may arise.

### DESCRIPTION OF THE INVENTION

To solve the problems with the spacing and sorting of garments hanging on hangers described in the state of the art during overhead conveyance, the system object of the invention comprises a plurality of screws, each having a different pitch, attached to one another and aligned with the overhead conveyor, in line with the overhead conveyance line or channel where the hangers are hanging. The preceding description is in accordance with the features of the independent claim attached to the present specification. Particular embodiments of the invention are described in the dependent claims.

More specifically, the hanger spacing screw comprises three pitch regions spaced from one another by a spacing groove, wherein the first two regions have a single channel pitch and the third portion has a triple channel pitch, which further comprises a plurality of aligned boreholes, wherein there are arranged additional prolongations coming out of the boreholes, which will be in charge of engaging the hooks of the hangers, being automatically spaced apart.

Throughout the description and claims, the word "comprises" and variants thereof do not intend to exclude other technical features, additions, components, or steps. For those skilled in the art, other objects, advantages, and features of the invention will be inferred in part from the description and in part from practicing the invention. The following examples and drawings are provided by way of illustration and do not intend to restrict the present invention. Furthermore, the present invention covers all the possible combinations of particular and preferred embodiments herein indicated.

### BRIEF DESCRIPTION OF THE DRAWINGS

A set of drawings which help to better understand the invention and which are expressly related to an embodiment of said invention presented as a non-limiting example thereof will be very briefly described below.
Figure 1 shows a front view of the screw integrated in the system object of the invention.
Figure 2 shows detail "A" of Figure 1
Figure 3 shows the development of a portion of the screw of Figure 1

### PREFERRED EMBODIMENT OF THE INVENTION

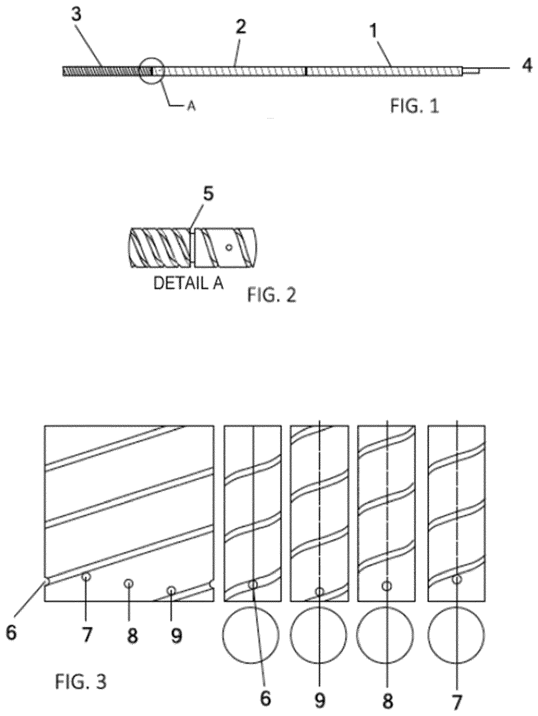

As can be seen in the attached drawings, the system of the invention essentially comprises at least one screw like the one in Figure 1 and it comprises, from right to left, a shaft (4), a first region (1) having a diameter of 35 x pitch 30 in a single channel; a second region (2) identical to the first region (1), and a third region (3) having the same diameter as the first region (1) and the second region (2) but a larger pitch (pitch 40) and single channel, with its length furthermore being greater than half the length of the first and second regions. The diameter of the shaft (4) is about half the diameter of the first to third regions (1 to 3) and is not threaded. Furthermore, between the first and third regions (1 to 3) there is a spacing groove which the hangers engage to make the transition between regions.

The first to third regions (1 to 3) comprise a plurality of boreholes (6, 7, 8, 9) each arranged at 90° in a single line, where the borehole (6) that is arranged in the track of the screw, in which a raised countersunk head bolt is housed, is in charge of taking the hanger out of the guide to enable repairing the hangers, whereas in the remaining holes (7, 8, 9) there are installed outwardly projecting sharp elements which are introduced into means of the hangers for spacing them automatically.

## Claims

1. Hanger spacing system in automated warehouses with overhead conveyor means for garments hanging on hangers and comprising at least one screw aligned with the overhead conveyor means and configured for receiving the garments hanging on the hangers, **characterized in that** the screw comprises: a first region (1) in a single channel; a second region (2) identical to the first region (1); and a third region (3), having the same diameter as the first region (1) and the second region (1), with a larger pitch than the other two regions and in a single channel, with its length furthermore being greater than half the length of the first and second regions (1, 2); and wherein the first to third regions (1 to 3) comprise a plurality of boreholes (6, 7, 8, 9) each arranged at 90° in a single line; wherein one borehole located in the track of the screw (6) houses a bolt, whereas the remaining holes (7, 8, 9) comprise outwardly projecting sharp elements.

2. System according to claim 1, wherein the first and second regions (1, 2) have a diameter of 35 mm x pitch 30 in a single channel, whereas the third region (3) has a diameter of 35 mm x pitch 40 in a triple channel.

3. An overhead conveyor for garments hanging on hangers of the type used in automated warehouses comprising the system according to any of claims 1 to 2.
